# FASCICULE DE BREVET EUROPEEN

(11) **EP 0 402 182 B1**
(45) Date de publication et mention de la délivrance du brevet: **20.09.1995**
(21) Numéro de dépôt: 90400280.5
(22) Date de dépôt: 02.02.1990
(51) Int. Cl.: G07F 7/08, G06K 19/06

(54) **Système de paiement par cartes à circuits intégrés bi-module**
Zahlsystem mit bimodularer Chipkarte
Payment system using bi-modular IC-card

(30) Priorité: 08.06.1989 WO PCT/FR89/00292
(43) Date de publication de la demande: 12.12.1990
(73) Titulaire: Parienti, Raoul, 06700 Saint Laurent-du-Var (FR)
(72) Inventeur: Parienti, Raoul, 06700 Saint Laurent-du-Var (FR)
(74) Mandataire: Faber, Jean-Paul

(56) Documents cités:
- EP-A- 0 159 539
- CH-A- 664 635
- FR-A- 2 582 123
- US-A- 4 443 027
- PATENT ABSTRACTS OF JAPAN vol. 8, no. 60 (P-262)(1497) 22 mars 1984,& JP-A-58 208882

## Description

De nos jours, on assiste à la vulgarisation des cartes dites "à mémoire" diffusées notamment par les banques et les Télécommunications.

En fait, derrière cette appellation, on peut distinguer essentiellement trois types de cartes à mémoire :
- La carte dotée d'une mémoire EPROM. Elle peut contenir 256 bits et une logique d'adressage. Elle est protégée contre les Ultra-Violets et comprend également une zone d'identification. Toute inscription d'un bit est ineffaçable. Ce type de carte est utilisé essentiellement par les Télécommunications.
- La carte d'abonné à logique câblée, qui intègre une mémoire EPROM de plusieurs kilobits divisés en plusieurs zones. Elle comprend également une logique d'adressage et une logique d'accès.
- Enfin, une carte à microprocesseur qui intègre un microprocesseur gérant les accès à différentes mémoires de type EPROM et/ou EEPROM.

Si on peut considérer que la carte de type EPROM intégrant des unités monétaires peut rendre d'appréciables services pour des utilisations bien spécifiques telles que taxation téléphonique, paiement d'unité fixe, elle a l'inconvénient d'un anonymat ne procurant aucune souplesse, ni tarifaire, ni de crédit. Elle a cependant un avantage économique lié à son faible coût.

La carte à microprocesseur représente un avantage certain lié à sa souplesse d'utilisation. Elle peut enregistrer différentes transactions, mais doit être régulièrement connectée à un terminal spécifique, son utilisation sous-entend donc de manière permanente une structure lourde pour la gestion des opérations.

La technique antérieure connait le brevet suisse n° 664 635.

Ce brevet suisse concerne une carte de crédit qui est formée d'une cassette affectant la forme d'un stylo qui comporte une bande d'information, un microprocesseur, un dateur et une pile. Un marquage optique est prévu sur la cassette pour indiquer l'authenticité.

Une extrémité de la cassette est équipée de contacts électriques reliés au microprocesseur et destinés à être insérés dans un lecteur pourvu de moyens de lecture optique et reliés à un terminal. Le microprocesseur est agencé pour calculer toutes les valeurs plus petites que l'unité.

Une telle disposition présente notamment l'inconvénient de ne pas présenter des critères de sécurité suffisants et de ne pas permettre d'effectuer des transactions à distance et ne peut être effaçable.

La technique antérieure connait, également, le brevet Japonais n° 58-208882 visant une carte de crédit qui comprend un corps 1 destiné à être connecté à un terminal 9. La carte reçoit les informations correspondant à un paiement minimum à travers une interface 2. Le montant d'une somme d'argent peut être enregistré et stocké dans une mémoire irréversible 4 par un circuit-mémoire de lecture. Si le montant de la somme d'argent enregistré dans la mémoire irréversible 4 est supérieur à un paiement minimum, un microprocesseur autorise l'opération qui est transmise au terminal 9 à travers l'interface 2. Si l'opération est autorisée, le montant à prélever est envoyé au corps 1 à travers l'interface 2. Dans le corps 1, il est prévu un circuit 6 d'effacement pour une mémoire pour effacer la mémoire irréversible d'une unité déterminée.

Une telle disposition présente les inconvénients suivants :
la carte est obligatoirement importante dans ses dimensions car elle comporte un circuit intégré et ne peut être comparé à une simple carte de crédit telle que celles qui sont d'un usage courant ;
le module amovible est connecté au circuit intégré ce qui, bien sûr, oblige à prévoir des moyens de connexions et complique la fabrication.

L'invention vise à fournir un nouveau mode de paiement, souple, évolutif et ne demandant aucune structure pour sa mise en oeuvre.

L'invention comprend un système de paiement de type ayant une carte dite "à puce" tel que défini dans la revendication indépendante 1 et suivantes.

Le microprocesseur peut notamment être agencé pour décrémenter la mémoire fixe lorsque la mémoire amovible est vide et ce, jusqu'à un seuil prédéterminé.

Après changement de la mémoire amovible, le crédit autorisé précédemment est décompté dans la nouvelle mémoire amovible, la mémoire fixe étant remise à zéro.

Dans un mode de réalisation particulier de l'invention, la mémoire amovible est agencée pour être munie d'un code lors de son acquisition, ledit code étant également inscrit sur la mémoire fixe, le microprocesseur étant agencé pour comparer lesdits codes à chaque transaction.

Avantageusement, le microprocesseur est agencé pour recalculer, lors d'une transaction, le montant à payer dans une nouvelle base où l'unité est l'unité monétaire à un coefficient multiplicateur près et pour décrémenter ensuite dans la mémoire amovible. le nombre d'unités correspondant à la valeur entière du nombre précédemment calculé : les décimales restantes étant mémorisées dans la mémoire fixe.

Lors de chaque transaction, le microprocesseur ajoute alors au montant recalculé les décimales susceptibles de se trouver dans la mémoire fixe, avant d'en extraire la partie entière, en vue de la décrémentation de la mémoire amovible.

En effet, l'unité monétaire étant généralement relativement faible, par exemple le centime en France, il faudrait que la mémoire programmable contienne un grand nombre d'unités élémentaires pour une somme d'argent relativement faible, par exemple 50.000 unités pour 500 francs, ce qui est difficilement convenable au vu de la technologie actuelle et au regard d'un niveau de coût acceptable, il paraît donc judicieux d'affecter à une unité monétique la valeur de un franc et donc de gagner un facteur cent sur le nombre d'unités. Au cours de chaque transaction, il est débité un nombre entier d'unités monétiques. Par exemple, pour 51,65 francs, il est débité 51 unités, soit 51 francs et les décimales restantes sont mémorisées dans la partie crédit automatique de la mémoire décrite ci-dessous. Les 0,65 sont stockés ainsi jusqu'à la prochaine transaction. Exemple : pour 18,75 F on commence par additionner le contenu de la mémoire crédit automatique, soit 18,75 + 0,65 = 19,40 F. On décrémente alors 19 unités monétiques, soit 19 francs et on mémorise 0,40 dans la mémoire. Plus généralement, le microprocesseur calcule le montant à payer dans une base où l'unité est l'unité monétaire à un coefficient multiplicatif près. Dans l'exemple ci-dessus, l'unité monétaire est le centime, alors que l'unité monétique est cent fois plus grande (le franc). La procédure décrite ci-dessus décrémente le nombre entier immédiatement inférieur au nombre calculé. On peut aussi décrémenter le nombre entier immédiatement supérieur et inverser la procédure. Lorsqu'il ne reste que quelques unités monétiques sur la mémoire programmable, deux solutions sont possibles : soit on dépasse sa capacité, et la somme supplémentaire est mémorisée dans la partie crédit automatique, soit on utilise une procédure spéciale dans laquelle le microprocesseur compte le nombre d'unités monétiques restantes et les décrémente immédiatement ; il retranche ensuite à ce nombre les décimales pouvant se trouver dans la partie crédit automatique et mémorise ce nouveau nombre dans la partie crédit automatique, ce nombre pouvant maintenant être positif ou négatif. Lors de la transaction suivante le microprocesseur décrémente en priorité ce nombre si il est positif avant de décrémenter la nouvelle mémoire programmable.

Dans un mode de réalisation particulier, le système selon l'invention comprend une interface portable ou lecteur muni d'un ecran et d'au moins une touche de validation et agencé pour recevoir le support et communiquer par rayonnement infrarouge avec un terminal ou borne fixe muni d'un clavier sur lequel peut être entré le montant de la transaction, lequel montant est communiqué à l'interface portable et inscrit sur l'écran en vue de sa validation par action sur ladite touche.

L'interface peut alors être agencée pour être mise en marche grâce à un interrupteur, de manière à permettre au terminal de vérifier la présence et la validité du support et d'enregistrer les informations concernant l'identification du payeur grâce à la liaison infrarouge.

L'interface peut également être agencée pour transmettre vers le terminal un signal codé lui indiquant que la décrémentation de la mémoire a eu lieu et que la transaction est ainsi terminée.

L'interface peut également être agencée pour écrire dans la mémoire fixe du support des informations qu'elle reçoit par rayonnement infrarouge du terminal ; ces informations pouvant être utilisées ultérieurement, lors du calcul de la somme à acquitter.

Dans ces conditions, on déplace le lecteur au niveau de l'utilisateur, chaque lecteur pouvant entrer en liaison non filaire avec la borne fixe. C'est cette borne fixe qui pilote l'opération, le lecteur mobile intégrant la carte, se contentant d'obéir à ses ordres. Tous les paiements peuvent être effectués soit grâce à la carte seule, soit grâce au lecteur mobile plus la carte à condition que l'appareil facturant le paiement soit muni d'un lecteur intégré et d'un module de dialogue avec un lecteur mobile. Chez un commerçant, par exemple, le paiement s'effectue de la façon suivante :
- l'utilisateur met en marche son lecteur mobile, l'appareil fixe du commerçant procède à l'interrogation de la carte à puce via le lecteur mobile grâce à une liaison infra rouge cryptée. Il vérifie en particulier la présence et la validité de la carte et enregistre l'identification du client. Ensuite, le commerçant enregistre le montant à payer sur son appareil qui le retransmet au lecteur mobile grâce à la liaison infrarouge. Ce montant apparaît sur un écran d'affichage situé sur le lecteur mobile. Ce n'est qu'après vérification et accord que le client autorise la transaction en appuyant sur une touche spéciale du clavier du lecteur. Le nombre de bits correspondant est décrémenté sur la carte et un accusé de réception est renvoyé vers l'appareil du commerçant.

L'acquittement d'un péage autoroutier est un peu différent car la somme à payer n'est pas la même en fonction de l'échangeur d'entrée. La procédure de paiement est donc la suivante. A l'entrée de l'autoroute, l'utilisateur place son lecteur en position programmation. A l'entrée de l'autoroute, une borne envoie vers le lecteur, sous forme de rayonnement infrarouge, les informations codées, relatives à cet échangeur qui les mémorise sur la carte. Lors du passage du péage, le lecteur transmet vers l'appareil de facturation ces mêmes informations codées. L'appareil vérifie ces informations ; calcule le prix à payer et le retransmet vers le lecteur. Si l'utilisateur est d'accord, il valide la transaction comme précédemment ; la décrémentation a lieu sur la carte et un accusé de réception est renvoyé vers l'appareil qui autorise le passage.

Selon une des versions possibles, la configuration peut être la suivante :

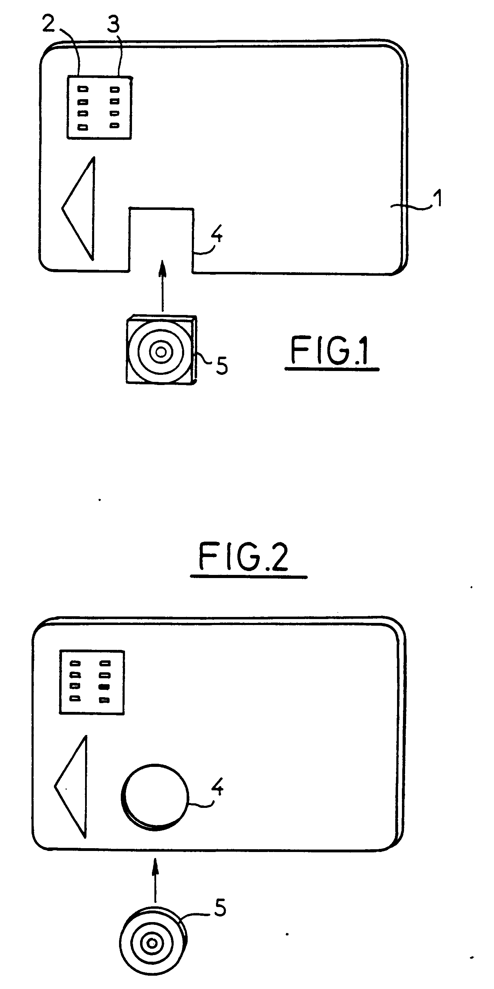

- sur la figure 1 on peut voir le support (1), qui peut être en matière plastique, intégrant de façon fixe dans sa partie supérieure gauche, le microprocesseur (2) et son environnement de mémoire EEPROM (3).

Sur la partie inférieure, on peut remarquer l'emplacement (4) réservé à la fixation des mémoires EPROM jetables (5). Cet emplacement (4) peut avoir plusieurs formes. Il peut être aménagé sur le plus grand côté du support comme représenté sur la figure 1 pour éviter son arrachage lors de l'introduction et du retrait de celui-ci dans un lecteur. Mais il peut être aussi aménagé au centre du support comme représenté sur la figure 2. Dans ce cas là les contacts électriques de l'EPROM (5) peuvent être agencés de façon annulaire et concentrique pour éviter les erreurs de positionnement. La partie droite du support peut être utilisée comme pour toute autre application, inscription d'identification numéro de la carte, photo du possesseur, etc.

Dans la mémoire (3) du microprocesseur (2) seront mémorisés :
- les éléments liés à l'identification du possesseur,
- les paramètres liés aux différents services autorisés (abonné, non abonné, étudiant, adulte, trajet, etc).
- un espace mémoire permettant un crédit tampon automatique.

Certains éléments seront ineffaçables. D'autres pourront être effacés et enregistrés à volonté.

On décrira plus particulièrement l'utilisation de l'invention en prenant pour exemple la demande de brevet français n° 88 00816 définissant un mode de transport urbain électrique à recharge automatisée, pouvant utiliser comme mode de paiement une carte telle que celle décrite précédemment.

L'utilisateur en-possession de sa carte se procure chez un distributeur autorisé une "pastille" contenant l'EPROM (5) correspondant à un prix fixé.

Il solidarise ensuite l'EPROM (5) dans l'emplacement (4). Sa carte est alors opérationnelle. Il introduit sa carte dans le lecteur situé à l'extérieur de chaque véhicule. L'utilisateur peut alors se déplacer et au fur et à mesure, les unités de l'EPROM sont décrémentées. Le rythme de la décrémentation est défini par la zone mémoire profil inscrite dans le microprocesseur et par éventuellement d'autres paramètres liés aux services rendus.

Dans le cas où l'EPROM (5) se retrouvait à zéro, avant la fin du trajet, on conçoit fort mal que celui-ci soit interrompu de façon aussi brutale. C'est pourquoi il est prévu un espace crédit automatique permettant à l'usager d'aller jusqu'au bout de son trajet car l'espace mémoire crédit automatique va enregistrer la somme manquante qui n'a pu être décrémentée, et ce, jusqu'à un seuil convenu.

A l'utilisation suivante, cette somme sera décomptée en priorité sur la nouvelle EPROM (5).

Une fois la carte introduite dans le lecteur, la procédure de validation peut donc être la suivante :
1 - Lecture de la mémoire (3) du microprocesseur (2), identification, profil,
2 - Présence et validation de l'EPROM (5) en fonction des données lues à l'étape précédente,

Si l'espace mémoire crédit automatique est différent de zéro, le microprocesseur (2) donne l'ordre de décrémenter la valeur du crédit sur l'EPROM (5), et remet l'espace crédit automatique à zéro.

Si par contre, le crédit est égal à zéro, la carte est alors validée pour l'utilisation. La carte ainsi décrite dans ce brevet permet une untilisation particulièrement souple adaptée à la "monétique" moderne :
- non spécialisation des lieux d'acquisition des "pastilles" contenant l'EPROM (5)
- non obligation d'avoir des transactions multiples d'un prix fixe donné
- grande souplessse liée au crédit automatique
- faible coût des modules prépayés
- possibilité d'inscrire sur l'élément EPROM (5) un code qui le rende impropre sur une autre carte que celle de l'utilisateur.

A cet effet, il sera possible d'inscrire un code dans la mémoire de l'EEPROM (3) et le même code dans une zone réservée à cet effet sur l'EPROM (5) acheté, pour éviter l'utilisation par autrui en cas de perte ou vol.

Ce type de carte pourra être utilisé dans toutes transactions où la monnaie traditionnelle parait dépassée par l'évolution technologique : affranchissement de lettres, machine de distribution de tout type de produits, acquisition de titres de transport, paiement d'autoroute, de taxis, paiement de chaînes cryptées à la consommation, etc.

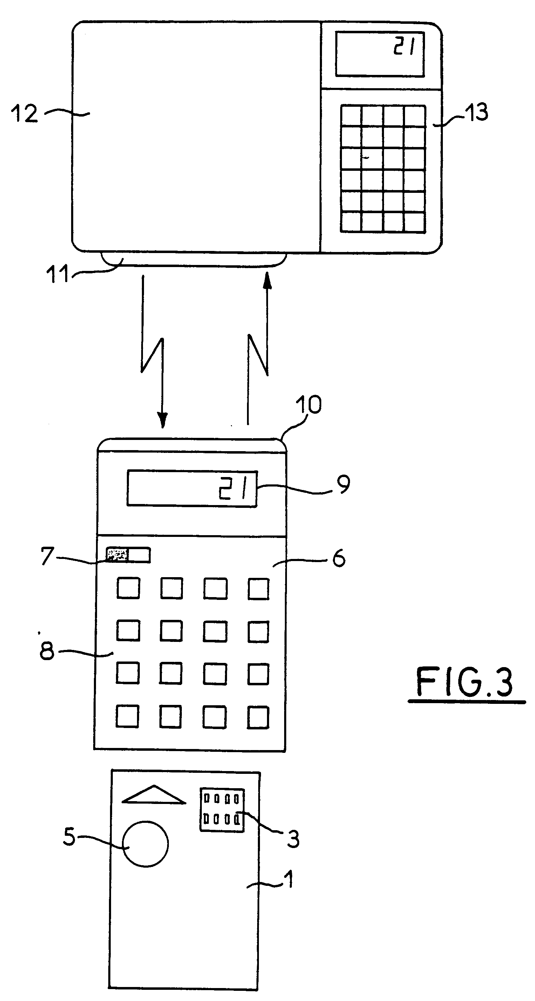

Sur la figure 3, on peut voir l'ensemble du dispositif avec son interface portable.

La carte à puce (1), contenant la mémoire programmable et effaçable (3) et la mémoire amovible uniquement programmable (5) est introduite dans le lecteur mobile (6). Sur celui-ci, se trouve l'interrupteur (7) de mise en marche, un clavier (8) permettant l'enregistrement de certaines commandes, telles que la validation de la transaction, et un écran (9) où s'affiche le prix à payer. Le bloc émission/réception infrarouge (10) se trouve à une extrémité du lecteur mobile (6). Le même bloc émission/réception (11) existe aussi sur l'appareil de facturation (12). Sur cet appareil, un clavier alphanumérique (13) permet d'enregistrer le prix à payer.

L'appareil (12) est alimenté à partir du réseau électrique standard alors que le lecteur (6) tire son alimentation de piles ou de batteries.

Dans une autre version de l'invention, le module amovible contient un montant qui, lors de la première transaction est chargé dans le module fixe, le module amovible est alors signé pour éviter d'autres chargements de modules fixes.

A chaque paiement, la présence du bon module amovible est vérifiée et la décrémentation en vue de l'acquittement dudit paiement est effectuée dans le module fixe.

Lorsque le solde chargé dans le module fixe atteint zéro, le module amovible est signé et donc rendu définitivement inutilisable.

Bien entendu, dans cette version, la procédure de crédit automatique précédemment décrite est toujours valable.

## Revendications

1. Système de paiement comprenant une carte dite "à puce" sur laquelle est monté un microprocesseur constituant une unité logique et sa mémoire programmable effaçable, la dite carte comporte un emplacement destiné à recevoir, emboîté, un autre module constitué d'une mémoire programmable jetable (5) contenant un certain crédit susceptible d'être décrémenté, caractérisé en ce que la dite mémoire programmable jetable (5) est pourvue de contacts externes destinés à coopérer avec des contacts correspondants d'un terminal susceptible de communiquer à l'unité logique le montant d'une transaction, l'unité logique étant agencée pour permettre des transactions entre la mémoire fixe et la mémoire amovible.

2. Système selon la revendication 1, caractérisé par le fait que l'unité logique est agencée pour décrémenter la mémoire fixe lorsque la mémoire amovible est vide , et ce jusqu'à un seuil prédéterminé.

3. Système selon la revendication 2, caractérisé par le fait que l'unité logique est agencée pour remettre à zéro la mémoire fixe et incrémenter d'un montant correspondant la mémoire amovible après un chargement de cette dernière.

4. Système selon la revendication 3, caractérisé par le fait que la mémoire amovible est agencée pour être munie d'un code lors de son acquisition, ledit code étant également inscrit sur la mémoire fixe, l'unité logique étant agencée pour comparer lesdits codes à chaque transaction.

5. Système selon l'une quelconque des revendications 1 à 4, caractérisé par le fait que, lors d'une transaction, l'unité logique est agencée pour recalculer le montant à payer dans une nouvelle base où l'unité monétaire à un coefficient multiplicateur près et pour décrémenter ensuite, dans la mémoire amovible, le nombre d'unités correspondant à la valeur entière du nombre précédemment calculé, les décimales restantes étant mémorisées dans la mémoire fixe.

6. Système selon la revendication 5, caractérisé par le fait que, lors d'une transaction, l'unité logique est agencée pour ajouter au montant calculé, les décimales susceptibles de se trouver dans la mémoire fixe avant d'en extraire la partie entière en vue de la décrémentation de la mémoire amovible.

7. Système selon l'une quelconque des revendications 1 à 6, caractérisé par le fait qu'il comprend une interface portable (6) munie d'un écran (9) et d'au moins une touche de validation, et agencée pour recevoir ledit support et pour communiquer par rayonnement infrarouge avec un terminal fixe (12) muni d'un clavier (13) sur lequel peut être entré le montant de la transaction qui est communiqué à l'interface portable et inscrit sur l'écran, en vue de sa validation par action sur ladite touche.

8. Système selon la revendication 7, caractérisé en ce que l'interface est agencée pour être mise en marche grâce à un interrupteur (7) de manière à permettre au terminal (12) de vérifier la présence et la validité du support et d'enregistrer les informations concernant l'identification du payeur grâce à la liaison infrarouge.

9. Système selon l'une quelconque des revendications 7 et 8, caractérisé en ce que l'interface est agencée pour transmettre vers le terminal un signal codé lui indiquant que la décrémentation de la mémoire a eu lieu et que la transaction est ainsi terminée.

10. Système selon les revendications 1, 2 et 3, caractérisé par le fait que l'interface est agencée pour écrire dans la mémoire fixe du support des informations qu'elle reçoit par rayonnement infrarouge du terminal, ces informations pouvant être utilisées ultérieurement lors du calcul de la somme à acquitter.

## Patentansprüche

1. Zahlungssystem mit einer sogenannten "Chip-Karte", auf der ein Mikroprozessor angebracht ist, der eine Logikeinheit sowie deren programmierbaren, löschbaren Speicher bildet, wobei die genannte Karte eine Aufnahme aufweist, die dazu bestimmt ist, einen weiteren Modul passend aufzunehmen, der durch einen programmierbaren, auswechselbaren Speicher (5) gebildet ist, der ein bestimmtes Guthaben enthält, das dekrementiert werden kann, dadurch gekennzeichnet, daß der genannte programmierbare, auswechselbare Speicher (5) mit äußeren Kontakten versehen ist, die zur Zusammenwirkung mit entsprechenden Kontakten eines Terminals bestimmt sind, das auf die Logikeinheit den Betrag eines Zahlungsvorganges übermitteln kann, wobei die Logikeinheit dazu eingerichtet ist, um Transaktionen zwischen dem festen Speicher und dem auswechselbaren Speicher zu gestatten.

2. System nach Anspruch 1, dadurch gekennzeichnet, daß die Logikeinheit dazu eingerichtet ist, um den festen Speicher zu dekrementieren, wenn der austauschbare Speicher leer ist, und zwar bis zu einem vorbestimmten Schwellenwert.

3. System nach Anspruch 2, dadurch gekennzeichnet, daß die Logikeinheit dazu eingerichtet ist, um den festen Speicher auf Null zurückzustellen und den auswechselbaren Speicher um einen entsprechenden Betrag nach dem Aufladen des letzteren zu inkrementieren.

4. System nach Anspruch 3, dadurch gekennzeichnet, daß der auswechselbare Speicher dazu eingerichtet ist, bei seinem Erwerb mit einem Code versehen zu werden, wobei der genannte Code gleichermaßen in dem festen Speicher eingeschrieben ist und die Logikeinheit dazu eingerichtet ist, um bei jedem Zahlungvorgang die genannten Code zu vergleichen.

5. System nach irgendeinem der Ansprüche 1 bis 4, dadurch gekennzeichnet, daß wahrend eines Zahlungsvorganges die Logikeinheit dazu eingerichtet ist, um den zu zahlenden Betrag in eine neue Basis umzurechnen, wo die Währungseinheit mit einem zugeordneten Multiplikationsfaktor versehen ist, und um dann in dem auswechselbaren Speicher die entsprechende Anzahl von Einheiten zu dekrementieren, deren Betrag der vorausgehend berechneten ganzen Zahl entspricht, wobei die Dezimalen in dem festen Speicher abgespeichert werden.

6. System nach Anspruch 5, dadurch gekennzeichnet, daß während eines Zahlungsvorganges die Logikeinheit dazu eingerichtet ist, um zu dem berechneten Betrag die Dezimalen hinzuzufügen, welche sich in dem festen Speicher befinden, bevor der ganzzahlige Teil für die Dekrementierung des auswechselbaren Speichers abgezogen wird.

7. System nach irgendeinem der Ansprüche 1 bis 6, dadurch gekennzeichnet, daß es eine tragbare Schnittstelle (6) aufweist, die mit einer Sichtanzeige (9) und zumindest einer Bestätigungstaste versehen und dazu eingerichtet ist, um die genannte Karte aufzunehmen und über Infrarotstrahlung mit einem festen Terminal (12) in Datenaustausch zu treten, welches mit einer Tastatur (13) versehen ist, auf der der Betrag des Zahlungsvorganges eingebbar ist, welcher zur tragbaren Schnittstelle übertragen und auf der Sichtanzeige angezeigt wird, um durch Betätigen der genannten Taste bestätigt zu werden.

8. System nach Anspruch 7, dadurch gekennzeichnet, daß die Schnittstelle dazu eingerichtet ist, um mittels eines Schalters (7) so in Betrieb gesetzt zu werden, daß einem Terminal (12) gestattet wird, das Vorhandensein und die Gültigkeit der Karte zu überprüfen und die die Identifizierung des Zahlers betreffenden Informationen vermittels der Infrarotverbindung zu speichern.

9. System nach einem der Ansprüche 7 und 8, dadurch gekennzeichnet, daß die Schnittstelle dazu eingerichtet ist, um zum Terminal ein kodiertes Signal zu übertragen, das diesem anzeigt, daß das Dekrementieren des Speichers stattgefunden hat und der Zahlungsvorgang somit beendet ist.

10. System nach den Ansprüchen 1, 2 und 3, dadurch gekennzeichnet, daß die Schnittstelle dazu eingerichtet ist, um in den festen Speicher der Karte Informationen einzuschreiben, welche sie vom Terminal über Infrarotstrahlung erhält, wobei diese Informationen später bei der Berechnung der zu bezahlenden Summe benutzt werden können.

## Claims

1. A system of payment comprising a card called a "flea card" upon which is mounted a microprocessor forming a logical unit and its erasable programmable memory, the said card having a location intended for receiving embedded another module consisting of a disposable programmable memory (5) containing a certain credit capable of being decremented, characterized in that the said disposable programmable memory (5) is provided with external contacts intended for cooperating with corresponding contacts on a terminal capable of communicating to the logical unit the amount of a transaction, the logical unit being set up to allow transactions between the fixed memory and the removable memory.

2. A system as in Claim 1, characterized by the fact that the logical unit is set up to decrement the fixed memory when the removable memory is empty, this being down to a predetermined threshold.

3. A system as in Claim 2, characterized by the fact that the logical unit is set up to reset the fixed memory to zero and increment the removable memory by a corresponding amount after a charge of the latter.

4. A system as in Claim 3, characterized by the fact that the removable memory is set up to be equipped with a code at the time of its acquisition, the said code being likewise read into the fixed memory, the logical unit being set up to compare the said codes at each transaction.

5. A system as in any one of the Claims 1 to 4, characterized by the fact that at the time of a transaction the logical unit is set up to recalculate the amount to be paid on a new basis in which the unit is the monetary unit except for a multiplying coefficient and then to decrement in the removable memory the number of units corresponding with the whole number value previously calculated, the residual decimals being memorized in the fixed memory.

6. A system as in Claim 5, characterized by the fact that at the time of a transaction the logical unit is set up to add to the calculated amount the decimals capable of being found in the fixed memory before extracting from it the whole-number portion with a view to decrementation of the removable memory.

7. A system as in any one of the Claims 1 to 6, characterized by the fact that it comprises a portable interface (6) equipped with a screen (9) and at least one validation key and set up to receive the said support and to communicate by infrared radiation with a fixed terminal (12) equipped with a keyboard (13) upon which may be entered the amount of the transaction which is communicated to the portable interface and inscribed on the screen, with a view to its validation by action upon the said key.

8. A system as in Claim 7, characterized in that the interface is set up to be switched on thanks to a switch (7) so as to allow the terminal (12) to check the presence and validity of the support and to record the items of information concerning the identification of the payer thanks to the infrared connection.

9. A system as in either of the Claims 7 or 8. characterized in that the interface is set up to transmit towards the terminal a coded signal indicating to it that the decrementation of the memory has taken place and that the transaction has thus been terminated.

10. A system as in Claims 1, 2 and 3, characterized by the fact that the interface is set up to read into the fixed memory of the support items of information which it receives by infrared radiation from the terminal, so that these items of information may be utilized subsequently at the time cf calculating the sum to be paid.
